# EUROPEAN PATENT APPLICATION

(11) **EP 2 810 565 A1**
(43) Date of publication of application: **10.12.2014**
(21) Application number: 13170312.6
(22) Date of filing: 03.06.2013
(51) Int. Cl.: A23L 1/30, A23L 3/3472, A23L 1/24

(54) **Antioxidant composition**

(71) Applicant: DuPont Nutrition Biosciences ApS, 1001 Copenhagen K (DK)
(72) Inventor: ISAK, Torben, DK-8382 Hinderup (DK); MANSSON, Lars, DK-8220 Brabrand (DK); MARCUSSEN, Jørn, 8260 Viby J (DK); CHRISTENSEN, Niels, 8000 Aarhus C (DK)
(74) Representative: Alcock, David

(57) **Abstract**

The present invention provides an anti-oxidant composition comprising (a) an extract obtained from or obtainable from a plant of the *Labiatae* family, (b) an extract obtained from or obtainable from a plant of the genus *Caralluma.*

## Description

The present invention relates to a composition that exhibits an anti-oxidant action.

### Background

Antioxidants are widely used in food products susceptible to oxidative degeneration. An antioxidant is defined by the Food and Drug Administration (21CFR 170.3) as "a substance used to preserve food by retarding deterioration, rancidity, or discoloration due to oxidation". There is an increasing need to develop economical, natural and effective food preservative systems to meet the public demand for convenient, natural, safe, healthy, good quality food products with guaranteed shelf life. To this end spices or plant extracts can be used in food as antioxidants and to impart flavour. One advantage of such extracts is that they are perceived as natural ingredients when compared to chemical antioxidants such as ethylenediaminetetraacetic acid (EDTA), butyl hydroxyanisol (BHA) and butylated hydroxytoluene (BHT).

There are large number of antioxidants known based on naturally occurring plant materials. It is noted that these materials have varying degrees of efficacy. Moreover, the antioxidant levels required to ensure preservation safety may prove uneconomical, or are above levels acceptable due to regulatory and legislation constraints when present in amounts sufficient to offer the required protection.

The present invention alleviates the problems of the prior art.

In one aspect the present invention provides an anti-oxidant composition comprising
(a) an extract obtained from or obtainable from a plant of the *Labiatae* family,
(b) an extract obtained from or obtainable from a plant of the genus *Caralluma.*

In one aspect the present invention provides an emulsion containing an anti-oxidant composition comprising
(a) an extract obtained from or obtainable from a plant of the *Labiatae* family,
(b) an extract obtained from or obtainable from a plant of the genus *Caralluma.*

In one aspect the present invention provides a foodstuff containing an anti-oxidant composition comprising
(a) an extract obtained from or obtainable from a plant of the *Labiatae* family,
(b) an extract obtained from or obtainable from a plant of the genus *Caralluma.*

In one aspect the present invention provides a process for preventing and/or inhibiting oxidation of a foodstuff, the process comprising the step of contacting the foodstuff with (a) an extract obtained from or obtainable from a plant of the *Labiatae* family, such as from a plant of the species *Rosmarinus officinalis, Salvia officinalis* or mixtures thereof, (b) an extract obtained from or obtainable from a plant of the genus *Caralluma,* such as a plant of the species *Caralluma fimbriata.*

In one aspect the present invention provides use of
(a) an extract obtained from or obtainable from a plant of the *Labiatae* family, such as from a plant of the species *Rosmarinus officinalis, Salvia officinalis* or mixtures thereof,
(b) an extract obtained from or obtainable from a plant of the genus *Caralluma,* such as a plant of the species *Caralluma fimbriata,*
   for preventing and/or inhibiting oxidation of an emulsion or a foodstuff.

In one aspect the present invention provides a kit for preparing a composition as defined herein, the kit comprising
(a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
(b) an extract obtained from or obtainable from a plant of the genus *Caralluma,* such as a plant of the species *Caralluma fimbriata,*
in separate packages or containers; optionally with instructions for admixture and/or contacting and/or use.

Aspects of the invention are defined in the appended claims.

The present invention provides a synergistic combination of components for preventing and/or inhibiting oxidation in a material, such as foodstuff. This combination of components allows lower levels of the antioxidants to be used to provide effective action. This is particularly important in food applications where reduction of dosage is desired for commercial and regulatory reasons.

It will be understood by one skilled in the art that by the term 'antioxidant' it is meant a substance which reduces the amount of oxidation over a given period when compared to the oxidation that would occur in the absence of that substance or it is a meant a material which increase the time required for a given amount of oxidation to occur when compared to the oxidation that would occur in the absence of that substance.

Plants of the family *Labiatae* contain several well-known herbs. Extracts from these plants have been shown to have antioxidant and, in some cases, antimicrobial activity (Nychas & Skandamis, 2003; Smid and Gorris, 1999; Loliger, 1989). Such extracts may be essential oils and oleoresins (extracts with essential oil content used in flavours and fragrances) or "deodorised"', extracts that have a high phenolic diterpene content and low level of flavour-inducing compounds.

Essential oils are extracted by simple steam distillation of the plant material. The most effective antioxidant compounds in rosemary and sage are reported to be carnosic acid, carnosol and rosmarinic acid (Cuvelier *et al.* 1996). Carnosic acid, a phenolic diterpene (C₂₀H₂₈O₄), occurs naturally in leaves of plants of the *Labiatae* family, particularly rosemary and sage, but also thyme and marjoram. Dried leaves of rosemary or sage contain 1.5 - 2.5% carnosic acid and 0.3 - 0.4% carnosol (US6231896). Carnosol is an oxidative artefact of carnosic acid (Wenkert et al. J. Org. Chem 30:2931, 1965). The oxidation takes place in the presence of harvesting in the leaves left to dry in the air and if the leaves are subjected to extraction with solvents. Rosmanol may also be a product of the oxidation of carnosic acid.

Of the *Labiatae* plant family, rosemary and sage have antioxidant activity in foods that is mainly related to phenolic diterpenes such as carnosic acid and carnosol, as well as other phenolic compounds, including phenolic triterpenes such as betulinic acid, oleanolic acid and ursolic acid; and rosmarinic acid. The phenolic diterpenes, phenolic triterpenes and rosmarinic acid are distinct from the essential oils and oleoresins that are often used in flavours and fragrances. The high flavour and odour levels of essential oils are not conducive to their use in food.

Plants of the genus *Caralluma,* such as *Caralluma fimbriata,* are also known to have antioxidant activity. The key phytochemical constituents of plants such as *Caralluma fimbriata* are reported to be pregnane glycosides, flavone glycosides, megastigmane glycosides, and saponins.

One skilled in the art would expect a combination of an extract from the *Labiatae* plant family and an extract from a plant of the genus *Caralluma,* to provide a simple additive antioxidant effect. However, studies described herein have demonstrated synergistic enhancement of antioxidant activity.

For ease of reference, these and further aspects of the present invention are now discussed under appropriate section headings. However, the teachings under each section are not necessarily limited to each particular section.

### PREFERRED ASPECTS

### LABIATAE EXTRACT

As discussed herein one extract used in the present invention is obtained from or is obtainable from a plant of the *Labiatae* family.

In one aspect the extract used in the present invention is obtained from a plant of the *Labiatae* family.

It will be appreciated by one skilled in the art that by the term "extract" or "extracts" it is meant any constituent of the plant which may be isolated from the whole plant.

In one aspect the extract used in the present invention is obtainable from a plant of the *Labiatae* family. It will be appreciated by one skilled in the art that an extract obtainable from a plant may be obtained from a plant or may be isolated from the plant, identified and then obtained from an alternative source, for example by chemical synthesis or enzymatic production. For example the extract may be produced by a eukaryotic or prokaryotic fermentation, by a process of genetic manipulation. The present applicants have recognised that products present in a plant of the *Labiatae* family may synergistically increase the activity of antioxidant material obtained or obtainable from a plant of the genus *Caralluma.* These products may be obtained from any source and will fall within the scope of the present invention.

The invention comprises use of a combination of an extract from a plant of the *Labiatae* family, such as rosemary (*Rosmarinus officinalis*) and antioxidant material obtained or obtainable from a plant of the genus *Caralluma,* that together give antioxidant activity in a food system. The extracts responsible for synergy in the present invention preferably refer to extracts of the plant family *Labiatae* that have been selectively extracted ("deodorised extracts") to increase their phenolic diterpene content (such as carnosic acid). These deodorised extracts can be distinguished by their high phenolic diterpene content (for example greater than 3.5 wt.%) and their low level (less than 1 wt.%) of flavour-inducing compounds from plant essential oils and oleoresins that are used as flavours or fragrances. Essential oils are typically extracted by simple steam distillation of the plant material.

Essential oils comprise the various essential oils in plants having the odour or the flavour of the plant from which they were extracted. The essential oils are typically terpenoids often comprising monoterpenes. For example an antioxidant type of rosemary extract, which could be described as selectively extracted or deodorised, contains > 3.5% wt.% phenolic diterpenes but less than 1 wt.% essential oils. A non-selective, flavouring extract contains 10-30 wt.% essential oils and a phenolic diterpene content of 2->3.5wt.%.

An essential oil is commonly described as the volatile ethereal fraction obtained from a plant or plant part by a physical separation process such as distillation or chromatographic separation. Essential oils have also been described as a "group of odorous principles, soluble in alcohol and to a limited extent in water, consisting of a mixtures of esters, aldehydes, ketones and terpenes. Essential oils are typically obtained by distilling plants with water; the oil that separates from distillate usually has highly characteristic odors identified with the plant origin. The resulting mixture of organic compounds was thought, in the days of alchemists, to be the essence of the plant, hence the term "essential oil".

In one preferred aspect the extract is a deodorised extract. Preferably the (deodorised) extract contains from 1.0 to 70 wt.% phenolic diterpenes, preferably 3.5 to 70 wt.% phenolic diterpenes and less than 1 wt.% essential oil. In one aspect the extract obtained from or obtainable from a plant of the *Labiatae* family contains phenolic diterpenes in an amount of at least 1wt% based on the weight of extract obtained from or obtainable from a plant of the *Labiatae* family, such as in an amount of 1 to 95 wt% based on the weight of extract obtained from or obtainable from a plant of the *Labiatae* family, such as in an amount of 1 to 90 wt% based on the weight of extract obtained from or obtainable from a plant of the *Labiatae* family, such as in an amount of 1 to 85 wt% based on the weight of extract obtained from or obtainable from a plant of the *Labiatae* family, such as in an amount of 1 to 70 wt% based on the weight of extract obtained from or obtainable from a plant of the *Labiatae* family, such as in an amount of 1 to 50 wt% based on the weight of extract obtained from or obtainable from a plant of the *Labiatae* family, such as in an amount of 1 to 30 wt% based on the weight of extract obtained from or obtainable from a plant of the *Labiatae* family, such as in an amount of 1 to 20 wt% based on the weight of extract obtained from or obtainable from a plant of the *Labiatae* family, such as in an amount of 1 to 15 wt% based on the weight of extract obtained from or obtainable from a plant of the *Labiatae* family, such as in an amount of 1 to 10 wt% based on the weight of extract obtained from or obtainable from a plant of the *Labiatae* family.

In one preferred aspect the extract is or comprises a phenolic diterpene. Preferably the phenolic diterpene is carnosic acid.

In one aspect the extract obtained from or obtainable from a plant of the *Labiatae* family contains carnosic acid in an amount of at least 1wt% based on the weight of extract obtained from or obtainable from a plant of the *Labiatae* family, such as in an amount of 1 to 95 wt% based on the weight of extract obtained from or obtainable from a plant of the *Labiatae* family, such as in an amount of 1 to 90 wt% based on the weight of extract obtained from or obtainable from a plant of the *Labiatae* family, such as in an amount of 1 to 85 wt% based on the weight of extract obtained from or obtainable from a plant of the *Labiatae* family, such as in an amount of 1 to 70 wt% based on the weight of extract obtained from or obtainable from a plant of the *Labiatae* family, such as in an amount of 1 to 50 wt% based on the weight of extract obtained from or obtainable from a plant of the *Labiatae* family, , such as in an amount of 1 to 40 wt% based on the weight of extract obtained from or obtainable from a plant of the *Labiatae* family such as in an amount of 1 to 30 wt% based on the weight of extract obtained from or obtainable from a plant of the *Labiatae* family, such as in an amount of 1 to 25 wt% based on the weight of extract obtained from or obtainable from a plant of the *Labiatae* family, such as in an amount of 1 to 20 wt% based on the weight of extract obtained from or obtainable from a plant of the *Labiatae* family, such as in an amount of 1 to 10 wt% based on the weight of extract obtained from or obtainable from a plant of the *Labiatae* family, such as in an amount of 1 to 5 wt% based on the weight of extract obtained from or obtainable from a plant of the *Labiatae* family.

In one preferred aspect the extract contains flavour-inducing compounds and/or essential oils in an amount of less than 2 wt.% based on the extract. In one preferred aspect the extract contains flavour-inducing compounds and/or essential oils in an amount of less than 1 wt.% based on the extract. In one preferred aspect the extract contains flavour-inducing compounds and/or essential oils in an amount of less than 2 wt.% based on the composition. In one preferred aspect the extract contains flavour-inducing compounds and/or essential oils in an amount of less than 1 wt.% based on the composition.

Typically flavour-inducing compounds and/or essential oils are camphor, verbenone, borneol and alfa-terpineol.

In one preferred aspect the combined amount of camphor present in the extract is less than 2 wt.% (preferably less than 1 wt.%, more preferably less than 0.5 wt.%), based on the extract.

In one preferred aspect the combined amount of verbenone present in the extract is less than 2 wt.% (preferably less than 1 wt.%, more preferably less than 0.5 wt.%), based on the extract.

In one preferred aspect the combined amount of borneol present in the extract is less than 2 wt.% (preferably less than 1 wt.%, more preferably less than 0.5 wt.%) based on the extract.

In one preferred aspect the combined amount of alfa-terpineol present in the extract is less than 2 wt.% (preferably less than 1 wt.%, more preferably less than 0.5 wt.%) based on the extract.

In one preferred aspect the combined amount of camphor, verbenone, borneol and alfa-terpineol present in the extract is less than 2 wt.% (preferably less than 1.0 wt.%), based on the extract.

In one preferred aspect the extract contain less than 2 wt.% of plant essential oils and/or oleoresins based on the extract. In one preferred aspect the extract contain less than 1 wt.% of plant essential oils and/or oleoresins based on the extract. In one preferred aspect the extract contain less than 2 wt.% of plant essential oils and/or oleoresins based on the composition. In one preferred aspect the extract contain less than 1 wt.% of plant essential oils and/or oleoresins based on the composition.

In one preferred aspect the extract contains essential oils in an amount of less than 2 wt.% based on the extract. In one preferred aspect the extract contains essential oils in an amount of less than 1 wt.% based on the extract. In one preferred aspect the extract contains essential oils in an amount of less than 2 wt.% based on the composition. In one preferred aspect the extract contains essential oils in an amount of less than 1 wt.% based on the composition.

In one preferred aspect the plant of the *Labiatae* family is selected from rosemary, sage, oregano, marjoram, mint, balm, savoury and thyme. In one preferred aspect the plant of the *Labiatae* family is selected from rosemary, sage, oregano, marjoram, mint, balm, and savoury. It will be understood that these name cover all species and varieties of plants known by these names.

In one preferred aspect the plant of the *Labiatae* family is selected from rosemary (*Rosmarinus officinalis* L.), sage (*Salvia officinalis* L.) oregano (*Origanum vulgare* L*.*), marjoram (*Origanum marjorana* L.), mint (*Mentha* spp.), balm (*Melissa officinalis* L.), savoury (*Satureia hortensis*), thyme (*Thymus vulgaris* L.).

In one preferred aspect the plant of the *Labiatae* family is selected from a plant of the species *Rosmarinus officinalis, Salvia officinalis* and mixtures thereof.

In one preferred aspect the plant of the *Labiatae* family is rosemary (*Rosmarinus officinalis*).

In one preferred aspect the composition comprises (a) an extract obtained from or obtainable from a plant of the species *Rosmarinus officinalis.*

In one preferred aspect the composition comprises (a) an extract obtained from a plant of the *Labiatae* family.

In one preferred aspect the composition comprises (a) an extract obtained from a plant of the species *Rosmarinus officinalis, Salvia officinalis* or mixtures thereof.

In one preferred aspect the composition comprises (a) an extract obtained from a plant of the species *Rosmarinus officinalis.*

In a further preferred aspect the phenolic diterpenes, phenolic triterpenes and rosmarinic acid are obtained by chemical synthesis.

Thus in one aspect the present invention provides
- an anti-oxidant composition comprising (a) carnosic acid, (b) an extract obtained from or obtainable from a plant of the genus *Caralluma.*
- a process for preventing and/or inhibiting oxidation of a foodstuff, the process comprising the step of contacting the foodstuff with (a) carnosic acid, and (b) an extract obtained from or obtainable from a plant of the *genus Caralluma.*
- use of (a) carnosic acid, and (b) an extract obtained from or obtainable from a plant of the *genus Caralluma,* for preventing and/or inhibiting oxidation of a foodstuff.
- a kit for preparing a composition as defined herein, the kit comprising (a) carnosic acid, and (b) an extract obtained from or obtainable from a plant of the *genus Caralluma,* in separate packages or containers; optionally with instructions for admixture and/or contacting and/or use.

### CARALLUMA EXTRACT

As discussed herein one extract used in the present invention is obtained from or is obtainable from a plant of the *genus Caralluma.*

In one aspect extract (b) is from a plant selected from plants of the species *Caralluma indica, Caralluma attenuata, Caralluma tuberculata, Caralluma edulis, Caralluma adscendes, Caralluma stalagmifera, Caralluma umbellate, Caralluma penicillata, Caralluma russeliana, Caralluma retrospiciens, Caralluma arabica, Caralluma lasiantha, Caralluma burchardii, Caralluma crenulata Wall., Caralluma dummeri" Caralluma europaea, Caralluma joannis Maire, Caralluma somalica, Caralluma speciosa* and *Caralluma fimbriata.* In one preferred aspect extract (b) is from a plant of the species *Caralluma fimbriata.*

In one preferred aspect the composition comprises (b) an extract obtained from a plant of the genus *Caralluma.*

In one preferred aspect the composition comprises (b) an extract obtained from or obtainable from a plant of the species *Caralluma fimbriata.*

In one preferred aspect the composition comprises (b) an extract obtained from a plant of the species *Caralluma fimbriata.*

It will be appreciated by one skilled in the art that by the term "extract" or "extracts" it is meant any constituent of the plant which may be isolated from the whole plant.

In one aspect the extract used in the present invention is obtainable from a plant of the *genus Caralluma.* It will be appreciated by one skilled in the art that an extract obtainable from a plant may be obtained from a plant or may be isolated from the plant, identified and then obtained from an alternative source, for example by chemical synthesis or enzymatic production. For example the extract may be produced by a eukaryotic or prokaryotic fermentation, by a process of genetic manipulation. The present applicants have recognised that products present in a plant of the *genus Caralluma* may synergistically increase the activity of antioxidant material obtained or obtainable from a plant of the *Labiatae* family. These products may be obtained from any source and will fall within the scope of the present invention.

The invention comprises use of a combination of an extract from a plant of the *genus Caralluma,* such as *Caralluma fimbriata* and antioxidant material obtained or obtainable from a plant of the *Labiatae* family, that together give antioxidant activity in a food system.

In one aspect the extract from a plant of the *genus Caralluma,* such as *Caralluma fimbriata* is or comprises a glycoside. In one aspect the extract from a plant of the *genus Caralluma,* such as *Caralluma fimbriata* is a glycoside. In one aspect the glycoside is a pregnane glycoside.

In one aspect the extract obtained from or obtainable from a plant of the genus *Caralluma* contains pregnane glycosides in an amount of at least 1wt% based on the weight of extract obtained from or obtainable from the plant of the genus *Caralluma* or of the genus *Caralluma,* such as in an amount of at least 2wt% based on the weight of extract obtained from or obtainable from the plant of the genus *Caralluma* or of the genus *Caralluma,* such as in an amount of at least 5wt% based on the weight of extract obtained from or obtainable from the plant of the genus *Caralluma* or of the genus *Caralluma,* such as in an amount of at least 10wt% based on the weight of extract obtained from or obtainable from the plant of the genus *Caralluma* or of the genus *Caralluma,* such as in an amount of at least 20wt% based on the weight of extract obtained from or obtainable from the plant of the genus *Caralluma* or of the genus *Caralluma,* such as in an amount of at least 30wt% based on the weight of extract obtained from or obtainable from the plant of the genus *Caralluma* or of the genus *Caralluma,* such as in an amount of 10 to 70 wt% based on the weight of extract obtained from or obtainable from the plant of the genus *Caralluma* or of the genus *Caralluma,* such as in an amount of 10 to 60 wt% based on the weight of extract obtained from or obtainable from the plant of the genus *Caralluma* or of the genus *Caralluma,* such as in an amount of 20 to 60 wt% based on the weight of extract obtained from or obtainable from the plant of the genus *Caralluma* or of the genus *Caralluma,* such as in an amount of 20 to 50 wt% based on the weight of extract obtained from or obtainable from the plant of the genus *Caralluma* or of the genus *Caralluma,* such as in an amount of 30 to 50 wt% based on the weight of extract obtained from or obtainable from the plant of the genus *Caralluma* or of the genus *Caralluma,* such as in an amount of 30 to 40 wt% based on the weight of extract obtained from or obtainable from the plant of the genus *Caralluma* or of the genus *Caralluma.*

In one aspect the pregnane glycosides are obtained by chemical synthesis.

Thus in highly preferred aspects the present invention provides
- an anti-oxidant composition comprising (a) an extract obtained from or obtainable from a plant of the *Labiatae* family, (b) pregnane glycosides
- a process for preventing and/or inhibiting oxidation of a foodstuff, the process comprising the step of contacting the foodstuff with (a) an extract obtained from or obtainable from a plant of the *Labiatae* family, and (b) pregnane glycosides.
- use of (a) an extract obtained from or obtainable from a plant of the *Labiatae* family, and (b) pregnane glycosides, for preventing and/or inhibiting oxidation of a foodstuff.
- a kit for preparing a composition as defined herein, the kit comprising (a) an extract obtained from or obtainable from a plant of the *Labiatae* family, and (b) pregnane glycosides, in separate packages or containers; optionally with instructions for admixture and/or contacting and/or use.

### COMPOSITION

It will be understood that the components of the composition utilised in the present invention may be present in any amount to provide an antioxidant effect and in particular (a) extract obtained from or obtainable from a plant of the *Labiatae* family and (b) extract obtained from or obtainable from a plant of the *genus Caralluma,* are present in amounts to provide a synergistic anti-oxidant effect.

In one aspect the ratio of (a) extract obtained from or obtainable from a plant of the *Labiatae* family, to (b) extract obtained from or obtainable from a plant of the *genus Caralluma,* is from 30:1 to 1:30, such as 30:1 to 1:1, such as 1:1 to 1:30, such as 25:1 to 1:25, such as 25:1 to 1:1, such as 1:1 to 1:25, such as 20:1 to 1:20, such as 20:1 to 1:1, such as 1:1 to 1:20, such as 15:1 to 1:15, such as 15:1 to 1:1, such as 1:1 to 1:15, such as 10:1 to 1:10, such as 10:1 to 1:1, such as 1:1 to 1:10, such as 5:1 to 1:5, such as 5:1 to 1:1, such as 1:1 to 1:5, such as 4:1 to 1:4, such as 4:1 to 1:1, such as 1:1 to 1:4,. In a preferred aspect the ratio of (a) extract obtained from or obtainable from a plant of the *Labiatae* family, to (b) extract obtained from or obtainable from a plant of the *genus Caralluma,* is from 4:1 to 1:10, such as 4:1 to 1:8, such as 4:1 to 1:5 such as 4:1 to 1:4. In a preferred aspect the ratio of (a) extract obtained from or obtainable from a plant of the *Labiatae* family, to (b) extract obtained from or obtainable from a plant of the *genus Caralluma,* is from 2:1 to 1:10, such as 2:1 to 1:8, such as 2:1 to 1:5 such as 2:1 to 1:4. In a preferred aspect the ratio of (a) extract obtained from or obtainable from a plant of the *Labiatae* family, to (b) extract obtained from or obtainable from a plant of the *genus Caralluma,* is from 1:1 to 1:10, such as 1:1 to 1:8, such as 1:1 to 1:5 such as 1:1 to 1:4. In a preferred aspect the ratio of (a) extract obtained from or obtainable from a plant of the *Labiatae* family, to (b) extract obtained from or obtainable from a plant of the *genus Caralluma,* is from 4:1 to 1:4, such as 2:1 to 1:4, such as 1:1 to 1:4.

In one aspect the ratio of (a) active anti-oxidant ingredient obtained from or obtainable from a plant of the *Labiatae* family, to (b) extract obtained from or obtainable from a plant of the genus Caralluma, is from 30:1 to 1:30, such as 30:1 to 1:1, such as 1:1 to 1:30, such as 25:1 to 1:25, such as 25:1 to 1:1, such as 1:1 to 1:25, such as 20:1 to 1:20, such as 20:1 to 1:1, such as 1:1 to 1:20, such as 15:1 to 1:15, such as 15:1 to 1:1, such as 1:1 to 1:15, such as 10:1 to 1:10, such as 10:1 to 1:1, such as 1:1 to 1:10, such as 5:1 to 1:5, such as 5:1 to 1:1, such as 1:1 to 1:5, such as 1:2 to 1:5. In a preferred aspect the ratio of (a) active anti-oxidant ingredient obtained from or obtainable from a plant of the *Labiatae* family, to (b) extract obtained from or obtainable from a plant of the genus Caralluma, is from 1:1 to 1:10, such as 1:1 to 1:8, such as 1:1 to 1:5 such as 1:2 to 1:5.

In one aspect the ratio of (a) active anti-oxidant ingredient obtained from or obtainable from a plant of the *Labiatae* family, to (b) active anti-oxidant ingredient obtained from or obtainable from a plant of the genus Caralluma, is from 20:1 to 1:20, such as 15:1 to 1:15, such as 10:1 to 1:10, such as 5:1 to 1:5, such as 4:1 to 1:4, such as 3:1 to 1:3, such as 2:1 to 1:3, such as 1:1 to 1:3.

In one aspect the ratio of (a) phenolic diterpene, to (b) pregnane glycosides, is from 20:1 to 1:20, such as 15:1 to 1:15, such as 10:1 to 1:10, such as 5:1 to 1:5, such as 4:1 to 1:4, such as 3:1 to 1:3, such as 2:1 to 1:3, such as 1:1 to 1:3.

### APPLICATIONS

The antioxidant composition may be utilised in any application in which inhibition of oxidation is required. As discussed herein, usage in foodstuffs is found to be particularly advantageous. In one aspect the present invention therefore provides
- a process for preventing and/or inhibiting oxidation of a material, the process comprising the step of contacting the material with
   (a) an extract obtained from or obtainable from a plant of the *Labiatae* family, and
   (b) an extract obtained from or obtainable from a plant of the *genus Caralluma.*
- use of
   (a) an extract obtained from or obtainable from a plant of the *Labiatae* family, and
   (b) an extract obtained from or obtainable from a plant of the *genus Caralluma,* for preventing and/or inhibiting oxidation of a material.

The antioxidant composition can particularly be incorporated into an emulsion. Thus there is provided an emulsion comprising an anti-oxidant composition as described herein. The emulsion may be, for example, a foodstuff or a cosmetic. Preferably the emulsion is a foodstuff.

In a further aspect there is provided a foodstuff comprising an anti-oxidant composition as described herein.

### FOODSTUFF

The composition, process and use of the present invention may prevent and/or inhibit oxidation in any material. However, in view of the problems associated with oxidation of foodstuffs and in view of the particular effectiveness of the present invention in foodstuffs, preferably the composition is a foodstuff or may be added to a foodstuff. It will be appreciated by one skilled in the art that when the present composition is a foodstuff the essential components of (a) an extract obtained from or obtainable from a plant of the *Labiatae* family and (b) extract from a plant of the *genus Caralluma* must be present in the foodstuff. They may have been provided by one or more means. For example they may have been added in the form of a composition containing the extracts. The components may have been added to the foodstuff sequentially.

In one aspect the composition of the present invention is an antioxidant composition suitable for addition to a foodstuff.

Many foodstuffs may be protected by the present invention. Typical foodstuffs are raw meat, cooked meat, raw poultry products, cooked poultry products, raw seafood products, cooked seafood products, ready to eat meals, pasta sauces, pasteurised soups, mayonnaise, salad dressings, oil-in-water emulsions, margarines, low fat spreads, water-in-oil emulsions, dairy products, cheese spreads, processed cheese, dairy desserts, flavoured milks, cream, fermented milk products, cheese, butter, condensed milk products, ice cream mixes, soya products, pasteurised liquid egg, bakery products, confectionery products, fruit products, and foods with fat-based or water-containing fillings. Preferably the foodstuff is mayonnaise.

In one aspect the present composition is dosed in a foodstuff in an amount to provide the extract obtained from or obtainable from a plant of the genus *Labiatae* in an amount of no greater than 5000ppm based on the weight of the foodstuff, such as no greater than 4000ppm, such as no greater than 3000ppm, such as no greater than 2000 ppm, such as no greater than 1000 ppm, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 5000ppm, such as from 1 to 4000ppm, such as from 1 to 3000ppm, such as from 10 to 3000ppm, such as from 1 to 2000 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide active anti-oxidant ingredient obtained from or obtainable from a plant of the genus *Labiatae* in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide phenolic diterpene obtained from or obtainable from a plant of the genus *Labiatae* in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide carnosic acid in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide the extract obtained from or obtainable from a plant of the genus *Caralluma* in an amount of no greater than 5000ppm based on the weight of the foodstuff, such as no greater than 4000ppm, such as no greater than 3000ppm, such as no greater than 2000 ppm, such as no greater than 1000 ppm, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 5000ppm, such as from 1 to 4000ppm, such as from 1 to 3000ppm, such as from 1 to 3000ppm, such as from 1 to 2000 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 10 to 200 ppm, such as 20 to 200 ppm, such as from 30 to 200 ppm, such as 40 to 200 ppm, such as 50 to 200 ppm, such as 50 to 150 ppm based on the weight of the foodstuff.

In one aspect the present composition is dosed in a foodstuff in an amount to provide active anti-oxidant ingredient obtained from or obtainable from a plant of the genus *Caralluma* in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide glycosides obtained from or obtainable from a plant of the genus *Caralluma* in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the present composition is dosed in a foodstuff in an amount to provide pregnane glycosides in an amount of no greater than 1000ppm based on the weight of the foodstuff, such as no greater than 700 ppm, such as no greater than 500 ppm, such as no greater than 400 ppm, such as no greater than 300 ppm such as no greater than 200 ppm, such as no greater than 150 ppm, such as no greater than 100 ppm, such as no greater than 75 ppm, such as no greater than 50 ppm, such as no greater than 40 ppm, such as from 1 to 1000 ppm, such as from 1 to 700 ppm, such as from 1 to 500 ppm, such as from 1 to 400 ppm, such as from 1 to 300 ppm such as from 1 to 200 ppm, such as 1 to 150 ppm, such as 1 to 100 ppm, such as from 1 to 75 ppm, such as 1 to 50 ppm, such as 1 to 40 ppm, such as 10 to 300 ppm, such as 10 to 150 ppm, such as 10 to 100 ppm, such as 10 to 50 ppm, such as 20 to 50 ppm based on the weight of the foodstuff.

In one aspect the composition of the present invention is an antioxidant composition suitable for addition to a pet food, i.e. a food suitable for consumption by a domesticated animal. The composition may be applied on, or in, the pet food itself and/or constituent(s) (e.g. ingredients) of the pet food. For example, the composition may be applied on, or in, a palatant.

### ADDITIONAL COMPONENTS

The composition of the present invention or the composition for use in the present invention may contain one or more additional components. However, in some aspects the antioxidant composition of the present invention (suitable for addition to a foodstuff) contains no additional components or contains no additional components that materially affect the properties of the composition. In these aspects the present invention provides
- an anti-oxidant composition consisting essentially of or consisting of (a) an extract obtained from or obtainable from a plant of the *Labiatae* family, (b) an extract obtained from or obtainable from a plant of the *genus Caralluma.*
- a process for preventing and/or inhibiting oxidation of a foodstuff, the process comprising the step of contacting the foodstuff with a composition consisting essentially of or consisting of (a) an extract obtained from or obtainable from a plant of the *Labiatae* family, and (b) an extract obtained from or obtainable from a plant of the *genus Caralluma.*
- use of a composition consisting essentially of or consisting of (a) an extract obtained from or obtainable from a plant of the *Labiatae* family, and (b) an extract obtained from or obtainable from a plant of the *genus Caralluma,* for preventing and/or inhibiting oxidation of a foodstuff.
- a kit for preparing a composition as defined herein, the kit consisting essentially of or consisting of (a) an extract obtained from or obtainable from a plant of the *Labiatae* family, and (b) an extract obtained from or obtainable from a plant of the *genus Caralluma,* in separate packages or containers; optionally with instructions for admixture and/or contacting and/or use.

In one preferred aspect the composition further comprises a carrier. Preferably the carrier is selected from propylene glycol, maltodextrin, sugar, salt, ethanol, water, protein, glycerol, medium chain triglyceride (MCT oil), and vegetable oil. It will be understood by one skilled in the art that the components of the present invention, that is (a) the extract obtained from or obtainable from a plant of the *Labiatae* family, (b) the extract obtained from or obtainable from a plant of the genus *Caralluma,* may be blended with the carrier or carriers in any suitable manner. For example, the components of the present invention may be simply mixed with a suitable carrier or carriers.

In one preferred aspect the composition further comprises an emulsifier. Preferably the emulsifier is selected from polyoxyethylene sorbitan esters (polysorbates), polyoxyethylene stearate, mono- and diglycerides of fatty acids, mono- and diglycerides esters further esterified with a dibasic organic acid selected from acetic acid, lactic acid, citric acid and mono- and diacetyl tartaric acid or mixtures thereof, lecithin, polyglycerol esters of fatty acids, polyglycerol polyricinoleate, sucrose esters of fatty acids, sucroglycerides, propylene glycol esters of fatty acids, sorbitan esters of fatty acids, sodium and calcium salt of stearoyl-2-lactylate, sodium, potassium, calcium and magnesium salts of fatty acids and ammonium phosphatides.

### PROCESS

As discussed herein in one aspect the present invention provides a process for preventing and/or inhibiting oxidation of a foodstuff, the process comprising the step of contacting the foodstuff with a composition comprising (a) an extract obtained from or obtainable from a plant of the *Labiatae* family, and (b) an extract obtained from or obtainable from a plant of the *genus Caralluma.*

In one aspect the extract obtained from or obtainable from a plant of the *Labiatae* family, and the extract obtained from or obtainable from a plant of the *genus Caralluma* are added to the foodstuff together.

In one aspect the extract obtained from or obtainable from a plant of the *Labiatae* family, and the extract obtained from or obtainable from a plant of the *genus Caralluma* are added to the foodstuff sequentially.

Thus the present invention provides in one aspect an antioxidant composition which may be added to a range of materials such as food systems and in another aspect a combination of two separate products which may added sequentially to materials such as food products.

The present invention will now be described in further detail by way of example only with reference to the accompanying figures in which:-
Figure 1 shows a graph;
Figure 2 shows a graph;
Figure 3 shows a graph;
Figure 4 shows a graph; and
Figure 5 shows a graph.

The present invention will now be described in further detail in the following example.

### EXAMPLE

In the present example a two-component antioxidant mixture of *Caralluma fimbriata* extract (CFE) and *Rosmarinus officinalis* extract (RE) was investigated in mayonnaise with 80 wt% oil. CFE and RE (two qualities; RE20 and RE70) as well as two-component mixtures (RE20+CFE and RE70+CFE) were tested in mayonnaise manufactured by a FrymaKoruma batch process.

The dosage was based on total product mayonnaise weight. The dosage of rosemary extracts (76.3ppm RE20 or 27.7ppm RE70) were equivalent to 20ppm total of carnosic acid and carnosol (that is the two rosemary extracts provided equivalent antioxidant activity). The dosage of *Caralluma fimbriata* extract (CFE) was 100ppm. The experiment was repeated the day after, that is duplicate experiments of all treatments were carried out.

The combination of CFE and RE was more effective than the individual components and a significant synergistic interaction between CFE and RE was demonstrated by statistical analysis of oxidation parameters (oxygen in sample headspace, conjugated diene hydroperoxides, 2,4-heptadienal and 2,4-decadienal).

The fact that CFE and RE interacts synergistically is novel and provides the following range of functional and economic benefits compared to present commercial natural solutions: high antioxidant activity (increased product shelf-life and consumer satisfaction), low cost-in-use, low impact on taste and low discolouration.

### Antioxidant materials

***Rosemary extract 70%*** was an extract from the leaves of *Rosmarinus officinalis* L. Material reference E030377-107 available from DuPont Nutrition and Biosciences ApS, Denmark.

***Rosemary extract 20%*** was an extract from the leaves of *Rosmarinus officinalis* L. Material reference DK12-00776 available from DuPont Nutrition and Biosciences ApS, Denmark.

Contents of the carnosic acid and carnosol were analysed in the rosemary extracts (g/100g extract) by high pressure liquid chromatography (HPLC) according to Thorsen & Hildebrandt (2003) and shown in table 1.

**Table 1: Contents (wt%) of carnosic acid and carnosol**

| Product | Material reference | Carnosic acid (wt%) | Carnosol (wt%) | Total (wt%) |
|---|---|---|---|---|
| Rosemary extract 70% | E030377-107 | 70.1 | 2.3 | 72.4 |
| Rosemary extract 20% | DK12-00776 | 20.0 | 6.2 | 26.2 |

**Caralluma fimbriata extract** was an extract from *Caralluma fimbriata* containing min. 30 wt% pregnane glycosides (36 wt% pregnane glycosides determined by gravimetric method). Material reference E070143-148 available from DuPont Nutrition and Biosciences ApS, Denmark.

### EXPERIMENTAL PROCEDURE

The following dosage of *Caralluma fimbriata* extract (CFE) and rosemary extract (two rosemary extract qualities; RE20 and RE70) and combinations (RE20+CFE and RE70+CFE) were added to a typical 80% mayonnaise formulation. Mentioned dosages were based on total product weight. The experiment was repeated the day after, i.e. duplicate experiments of all treatments were carried out (table 2).

**Table 2: Antioxidant treatments and abbreviations used in this report**

| **ID** | **Sample** | **Antioxidant treatments** |
|---|---|---|
| | *Trial A* | |
| 172A | CTRL | Control, nothing added |
| 173A | RE20 | 76.3ppm Rosemary extract 20% (RE20) |
| 174A | CFE | 100ppm *Caralluma fimbriata* extract (CFE) |
| 175A | RE20 + CFE | 76.3ppm Rosemary extract 20% (RE20) + 100ppm *Caralluma fimbriata* extract (CFE) |
| 177A | RE70 | 27.7ppm Rosemary extract 70% (RE70) |
| 178A | RE70 + CFE | 27.7ppm Rosemary extract 70% (RE70) + 100ppm *Caralluma fimbriata* extract (CFE) |

| | *Trial B* | |
|---|---|---|
| 172B | CTRL | Control, nothing added |
| 173B | RE20 | 76.3ppm Rosemary extract 20% (RE20) |
| 174B | CFE | 100ppm *Caralluma fimbriata* extract (CFE) |
| 175B | RE20 + CFE | 76.3ppm Rosemary extract 20% (RE20) + 100ppm *Caralluma fimbriata* extract (CFE) |
| 177B | RE70 | 27.7ppm Rosemary extract 70% (RE70) |
| 178B | RE70 + CFE | 27.7ppm Rosemary extract 70% (RE70) + 100ppm *Caralluma fimbriata* extract (CFE) |

With respect to the rosemary extracts, additions of RE20 and RE70 were equivalent to 20ppm of carnosic acid plus carnosol (i.e. the two rosemary extracts had equivalent antioxidant activity, as shown in table 3). For CFE a dosage of 100ppm extract was added to the mayonnaise equivalent to 36ppm pregnane glycosides (table 4).

**Table 3: Dosage of rosemary components (carnosic acid + carnosol)**

| Material | Material reference | Dosage of extract based on total mayonnaise weight | Content of carnosic acid + carnosol in extract | Dosage of carnosic acid + carnosol in experiment based on total mayonnaise weight |
|---|---|---|---|---|
| Rosemary extract 70% | E030377-107 | 27.7ppm | 72.4 wt% | 20ppm |
| Rosemary extract 20% | DK12-00776 | 76.3ppm | 26.2 wt% | 20ppm |

**Table 4: Dosage of Caralluma components (pregnane glycosides)**

| Material | Material reference | Dosage of extract based on total mayonnaise weight | Content of pregnane glycosides in extract | Dosage of pregnane glycosides in experiment based on total mayonnaise weight |
|---|---|---|---|---|
| *Caralluma fimbriata* extract | E070143-148 | 100ppm | 36 wt% | 36ppm |

The formulation and process conditions for production of 9kg batches are outlined in table 5 and in paragraphs below. CFE, RE20 were added as dry blends together with the dry ingredients. Due to high ethanol and vegetable oil solubility of RE70, this material was pre-dissolved in ethanol and added to oil phase.

**Table 5: Mayonnaise formulation. Grams of ingredients used for production of 9 kg batches on manufacturing day one (trial A) and day two (trial B).**

| Batch no. & sample ID | 172A+B CTRL | 173A+B RE20 | 174A+B CFE | 175A+B RE20+CFE | 177A+B RE70 | 178A+B RE70+CFE |
|---|---|---|---|---|---|---|
| Canola oil | 7200.00 | 7200.00 | 7200.00 | 7200.00 | 7200.00 | 7200.00 |
| Tap water | 906.25 | 905.56 | 905.35 | 904.66 | 906.00 | 905.10 |
| Salt (sodium chloride) | 63.00 | 63.00 | 63.00 | 63.00 | 63.00 | 63.00 |
| Sucrose | 90.00 | 90.00 | 90.00 | 90.00 | 90.00 | 90.00 |
| Potassium sorbate | 9.00 | 9.00 | 9.00 | 9.00 | 9.00 | 9.00 |
| GRINDSTED® FF 5105 | 6.75 | 6.75 | 6.75 | 6.75 | 6.75 | 6.75 |
| Egg yolk (pasteurised) | 405.00 | 405.00 | 405.00 | 405.00 | 405.00 | 405.00 |
| Vinegar 10% | 270.00 | 270.00 | 270.00 | 270.00 | 270.00 | 270.00 |
| Mustard | 45.00 | 45.00 | 45.00 | 45.00 | 45.00 | 45.00 |
| 96% ethanol (mL) | 1.000 | 1.000 | 1.000 | 1.000 | 1.000 | 1.000 |
| Rosemary extract 70% | | | | | 0.249 | 0.249 |
| Maltodextrin | 4.000 | 4.000 | 4.000 | 4.000 | 4.000 | 4.000 |
| Rosemary extract 20% | | 0.687 | | 0.687 | | |
| Caralluma fimbriata extract | | | 0.900 | 0.900 | | 0.900 |
| Batch size (gram) | 9000.00 | 9000.00 | 9000.00 | 9000.00 | 9000.00 | 9000.00 |

### Process

1. Dissolve sodium chloride, sugar, potassium sorbate and powder antioxidant blend (if added) in ¾ parts of the water in FrymaKoruma Disho A15 mixer (Romaco FrymaKoruma, Germany), while mixing at 3000 rpm and stirring at 60 rpm in a vacuum of 500 mbar for 1 minute.
2. Make a slurry of GRINDSTED® FF 5105 and approx. 1/100 parts of the canola oil (including pre-dissolved RE70 - if added), and pump the slurry into the water phase at 3000 rpm in a vacuum of 500 mbar and continue mixing for 1 minute.
3. Add egg yolk and the rest of the water, while mixing at 3000 rpm and stirring at 60 rpm in a vacuum of 500 mbar and continue mixing for 3 minutes.
4. Emulsify the rest of the canola oil at 3500rpm and continue mixing for 2 minutes.
5. Add vinegar and mustard while mixing at 3500 rpm and stirring at 60 rpm in a vacuum of 300 mbar for 1 minute.
6. Finally, mixing speed was decreased to 2500 rpm and stirring at 60 rpm in a vacuum of 300 mbar and held for 30 seconds before each batch before filling (at temperature 25°C).

### Filling, storage and sampling

The mayonnaise was filled into Duma® special containers (Gerresheimer AG, 150 ml HD Polyethylene - caps LD Polyethylene) with 50g in each and placed at 20°C in a temperature controlled heating cabinet. These containers were used for determination of GC volatiles (2,4-heptadienal and 2,4-decadienal) and conjugated dienes. At each sampling day one container was opened. The mayonnaise sample was manually stirred with spatula for 30 seconds. Two centrifuge tubes (12ml) were filled with 8-10g sample and stored at minus 18°C (to break emulsion and to halt oxidation until time of analysis). The remaining mayonnaise in Duma® containers was used for sensory analysis on the sampling day.

Further 50g mayonnaise was filled into one glass bottle (volume 115ml) and subsequently closed with a Teflon® cap. This bottle was placed at 20°C in a temperature controlled heating cabinet and residual oxygen was monitored during storage (repeated analysis of the same bottle).

### METHODS

### Phenolic diterpenes in rosemary extract

The contents of the phenolic diterpenes (carnosol and carnosic acid) were analysed in rosemary extracts by high pressure liquid chromatography (HPLC) according to Thorsen & Hildebrandt (2003).

### Peroxide value of canola oil

The peroxide value was determined for the canola oil by potentiometric titration according to the Official Methods and Recommended Practices of The AOCS, 5^{th} Edition, Method: Cd 8-53.

### Metals in mayonnaises

The contents of metals (Cu, Fe, Ni and Zn) were analysed for the mayonnaise. The analysis was based on Inductively Coupled Plasma-Optical Emission Spectroscopy (ICP-OES) using a Varian Vista MPX (Varian, Palo Alto, CA) according to the Official Methods of Analysis of the AOAC International, 16^{th} Edition, Methods: 965.09, 977,29, 985,01, 984,27.

### Oxygen consumption in mayonnaise

50 grams (±0.1g) of freshly produced mayonnaise was filled into a 115ml glass bottle (Mikrolab, Aarhus) and closed with a Teflon® cap. This bottle was placed at 20°C in a temperature controlled heating cabinet and residual oxygen was monitored during storage (repeated analysis of the same bottle) using a Checkmate 9900 Oxygen headspace analyser (PBI-Dansensor A/S, Denmark).

### Conjugated diene (CD) hydroperoxides in mayonnaise

The amount of conjugated diene (CD) hydroperoxides was measured by UV-spectroscopy according to internal method (A1987) modified after Fishwick & Swoboba (1977) and Kähkonen *et al.* (1999). Mayonnaise kept at -18°C was allowed to thaw at room temperature for approximately 1-2 hours and then separated in oil/interphase/water phase by centrifugation 2500 rpm/10 min/20°C (Sigma 3-18K). Then 10mg of the upper clear oil phase was added 10 ml isooctane (Sigma-Aldrich, Art. 32291, Steinheim, Germany) and whirl mixed for 5 seconds. Absorption spectra were recorded by scanning the absorbance from 300 to 220nm using a spectrophotometer (Shimadzu UV-1650PC spectrophotometer, Germany) with scan speed: medium, sampling interval: 1nm and a flow cuvette (0.1cm). The spectrophotometer was set to zero with isooctane. The content of conjugated dienes was calculated as the absorbance at 234nm using a molar extinction coefficient of 26000 (E234 nm = 26000 l · mol⁻¹ · cm⁻¹) to calculate results in millimoles hydroperoxides per kg of oil.

### 2,4-heptadienal and 2,4-decadienal in mayonnaises

The amount of 2,4-heptadienal and 2,4-decadienal of the separated oil phase was determined by gas chromatography mass spectrometry with selected ion monitoring (GC-MS-SIM) using an Agilent 6890N GC/Agilent 5973N MSD system. Mayonnaise kept at -18°C until analysis was allowed to thaw at room temperature for approximately 1-2 hours and then separated in oil/interphase/water phase by centrifugation 2500 rpm/10 min/20°C (Sigma 3-18K). 0.5g (+/- 0.1g) of separated oil were added 10ml methanol and internal standard (hexyl hexanoate and 5-methyl-2-hexanone) corresponding to approximately 10 mg/kg of each internal standard. Then the slurry was shaken for 15 minutes on a shaker (Multi Reax, Heidolph, Germany) at 1000 rpm and placed in freezer overnight. An aliquot of the supernatant methanol phase was subsequently transferred to a GC injection vial. A calibration was performed in the range of 0-80 mg/kg by adding a stock solution of 2,4-heptadienal and 2,4-decadienal (mixtures of trans,trans-2,4 and cis,trans-2,4 isomers) and internal standard directly to methanol. In the calculations, the response from the trans,trans-2,4 isomers was added to the response from the cis,trans-2,4 isomers, and reported as the total of 2,4-heptadienal isomers or the total of 2,4-decadienal isomers.

### Sensory evaluation of mayonnaises

The sensory evaluation was carried out by two oxidation specialists who regularly taste and smell foods to identify the development of oxidation products. The objective was to evaluate sensory characteristics (appearance, aroma, taste and texture) and in particular development of oxidative off-flavour (taste, aroma) during storage.

### Statistical analysis of synergistic interaction between CFE and RE

Two-factor interaction between RE and CFE was studied using multivariate data analysis of variance (50-50 MANOVA) as described by Langsrud (2000, 2002). The model assumes standardised (1/stdev) responses and a two-way model structure for combinations of RE and CFE. The dataset consisted of duplicate determinations (sample A and B) of two storage time measurements (14, 28 days) of four methods (i.e. oxygen consumption, conjugated dienes, 2,4-heptadienal and 2,4-decadienal) for all 6 treatments (i.e. CTRL, RE20, CFE, RE20+CFE, RE70, RE+CFE).

### RESULTS AND DISCUSSION

### Peroxide value in canola oil

The canola oil (COLZAO™, 190kg drum, AarhusKarlshamn, Denmark) was kept refrigerated and unopened until the day of manufacture of mayonnaise. Each day of manufacture the oil was analysed. The oil had an acceptably low amount of peroxides (0.4 meq/kg oil) as shown in table 6. The values were as expected for commercial canola oil delivered in drums.

**Table 6: Peroxide values (meq/kg) in canola oil used for trial A and trial B.**

| Sample ID | Trial | Analytical result (meq/kg) |
|---|---|---|
| COLZAO™ canola oil | A | 0.4 |
| COLZAO™ canola oil | B | 0.4 |

### Metals in mayonnaises

One batch of freshly produced mayonnaise (control batch) was analysed for the content of Cu, Fe, Ni and Zn by Inductively Coupled Plasma-Optical Emission Spectroscopy (ICP-OES). Table 7 shows the average of triplicate determinations of metals (mg/kg mayonnaise). The values were as expected in egg yolk based mayonnaise; egg yolk is the major contributor of metals.

**Table 7: Metal contents (mg/kg mayonnaise).**

| Sample ID | Trial | ppm Cu | ppm Fe | ppm Ni | ppm Zn |
|---|---|---|---|---|---|
| CTRL - Day 0 | A | 0.16 | 1.80 | <0.1 | 1.30 |
| CTRL - Day 0 | B | 0.17 | 1.60 | <0.1 | 1.20 |

### Antioxidant activity of rosemary extract and Caralluma fimbriata extract

### Oxygen consumption in sample headspace

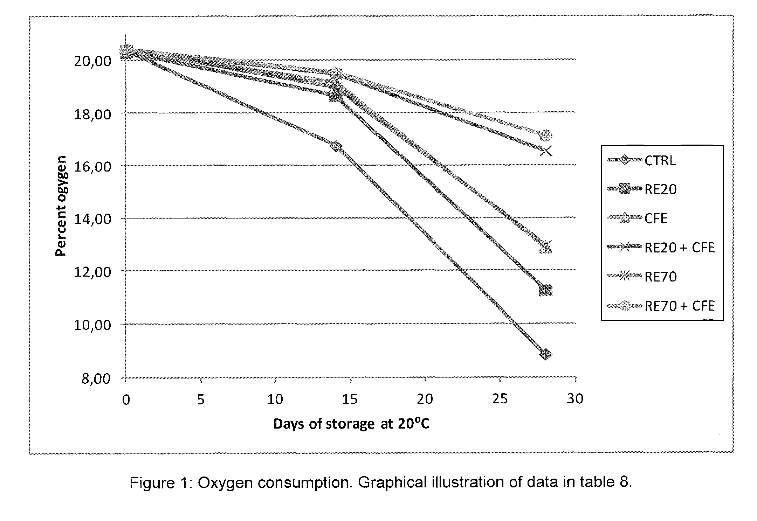

The consumption of oxygen during storage relates to formation of primary oxidation products (hydroperoxides). An antioxidant will delay the uptake of oxygen by the mayonnaise sample. The oxygen content in sample headspace after 1, 14 and 28 days of storage at 20°C is shown in table 8. The standard deviation on means of duplicates in table 8 and subsequent tables was calculated from an ANOVA gauge R&R (ANOVA gauge repeatability and reproducibility). For a graphical view of data see also Figure 1.

The oxygen was consumed more rapidly in the unprotected control sample (i.e. CTRL) compared to the one-component treated samples (i.e. RE20, CFE, RE70). The two-component treatments (i.e. RE20+CFE and RE70+CFE) demonstrated the strongest antioxidant protection.

**Table 8: Oxygen content (%) in sample headspace after 1, 14 and 28 days of storage at 20°C. Values are mean of duplicates; standard deviation from ANOVA gauge R&R are given in parentheses.**

| Batch | %O₂ Day 1 | %O₂ Day 14 | %O₂ Day 28 |
|---|---|---|---|
| CTRL | 20.4 (0.1) | 16.8 (0.5) | 8.9 (0.6) |
| RE20 | 20.3 (0.1) | 18.7 (0.2) | 11.3 (1.1) |
| CFE | 20.4 (0.2) | 19.2 (0.5) | 12.9 (1.5) |
| RE20 + CFE | 20.4 (0.1) | 19.5 (0.2) | 16.6 (0.6) |
| RE70 | 20.4 (0.1) | 19.0 (0.1) | 13.0 (0.8) |
| RE70 + CFE | 20.4 (0.1) | 19.5 (0.1) | 17.2 (0.2) |

### Conjugated diene (CD) hydroperoxides development

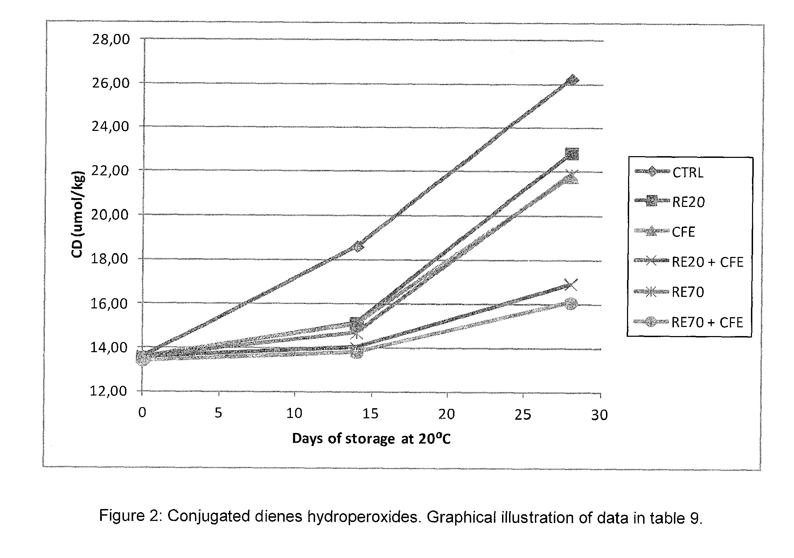

Conjugated diene (CD) hydroperoxides relates to formation of primary oxidation products (hydroperoxides). An antioxidant will delay formation of conjugated diene (CD) hydroperoxides in mayonnaise sample. The CD content in mayonnaise after 0, 14 and 28 days of storage at 20°C is shown in table 9. For a graphical view of data see also figure 2.

CD developed more rapidly in the unprotected control sample (i.e. CTRL) compared to the one-component treated samples (i.e. RE20, CFE, RE70). The two-component treated samples (i.e. RE20+CFE and RE70+CFE) demonstrated the strongest antioxidant protection. Further, it appeared that the antioxidant activity of the two different qualities of rosemary extracts (i.e. RE20, RE70) had comparable activity as illustrated when they were added alone (at equal amounts of phenolic diterpenes) and when they were added in combinations with CFE.

**Table 9: Conjugated dienes hydroperoxides (µmol hydroperoxideslkg oil) after 0, 14 and 28 days of storage at 20 °C. Values are mean of duplicates; standard deviation from ANOVA gauge R&R are given in parentheses.**

| Batch | Conjugated dienes Day 0 | Conjugated dienes Day 14 | Conjugated dienes Day 28 |
|---|---|---|---|
| CTRL | 13.6 (0.1) | 18.6 (0.4) | 26.3 (0.2) |
| RE20 | 13.6 (0.2) | 15.2 (0.4) | 22.9 (0.6) |
| CFE | 13.6(0.1) | 15.1 (0.6) | 21.8 (1.2) |
| RE20 + CFE | 13.6 (0.1) | 14.0 (0.1) | 16.9 (0.7) |
| RE70 | 13.6 (0.0) | 14.7 (0.4) | 21.9 (1.9) |
| RE70 + CFE | 13.4 (0.1) | 13.8 (0.1) | 16.1 (0.1) |

### 2,4-heptadienal and 2,4-decadienal development

Oxidation of oils and fats produces a complex mixture of volatile secondary oxidation products. Snyder *et al.* (1985) found that volatile secondary oxidation products in canola oil was dominated by trans,cis- and trans,trans-2,4-heptadienal, hexanal, nonanal, and the trans,cis- and trans,trans-2,4-decadienals. Jacobsen *et al.* (1999) found that 4 volatile oxidation compounds, namely 3-furaldehyde, 2,4-heptadienal, 2,4-decadienal and ethyl benzene, appeared to correlate to the fishy and rancid off-flavours that developed in mayonnaise. In this experiment 2,4-heptadienal and 2,4-decadienal were the dominant volatiles in the canola oil based mayonnaises and therefore selected as markers of oxidation.

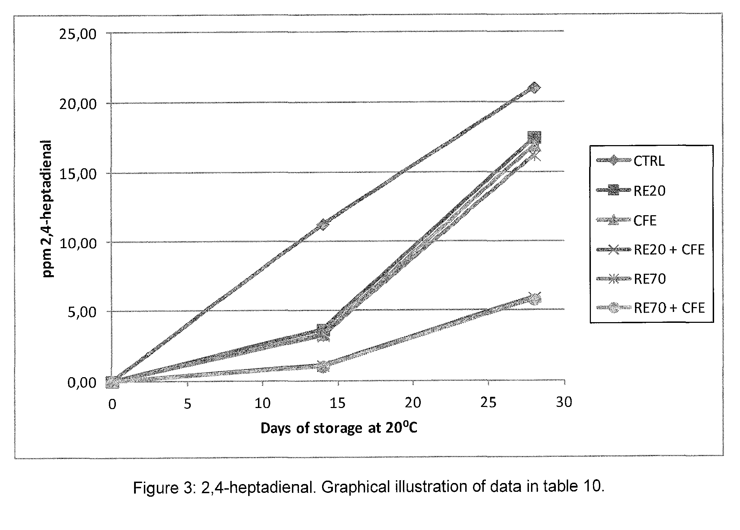

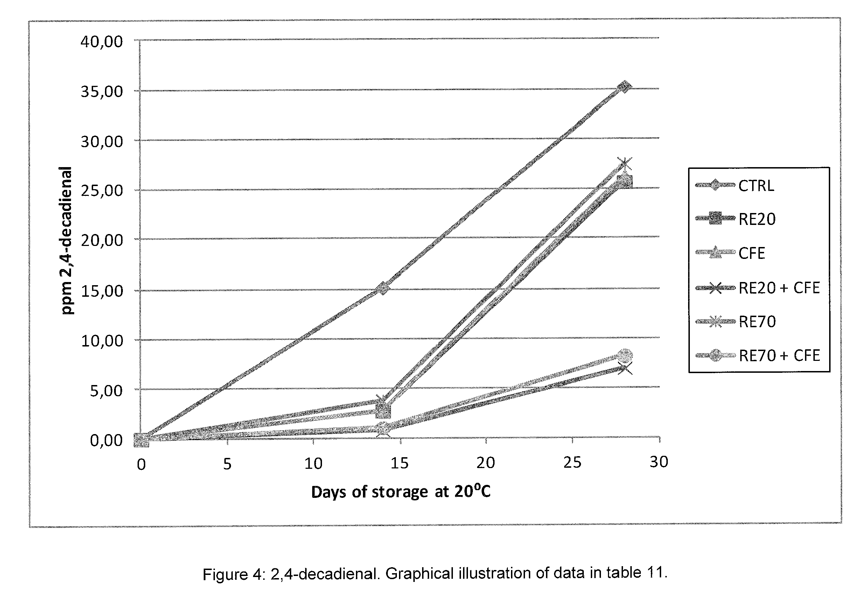

An antioxidant will delay formation of 2,4-heptadienal and 2,4-decadienal in the mayonnaise sample. The 2,4-heptadienal and 2,4-decadienal content in mayonnaise after 0, 14 and 28 days of storage at 20°C is shown in table 10 and table 11. For a graphical view of data see also figure 3 and 4.

2,4-heptadienal and 2,4-decadienal developed more rapidly in the unprotected control sample (i.e. CTRL) compared to the one-component treated samples (i.e. RE20, CFE, RE70). The two-component treated samples (i.e. RE20+CFE and RE70+CFE) demonstrated the strongest antioxidant protection. Further, it appeared that the antioxidant activity of the two different qualities of rosemary extracts (i.e. RE20, RE70) have comparable activity as illustrated when they were added alone (at equal amounts of phenolic diterpenes) and when they were added in combinations with CFE.

**Table 10: 2,4-heptadienal (mg/kg oil) after 0, 14 and 28 days of storage at 20 °C. Values are mean of duplicates; standard deviation from ANOVA gauge R&R are given in parentheses.**

| Batch | 2.4-heptadienal Day 0 | 2.4-heptadienal Day 14 | 2.4-heptadienal Day 28 |
|---|---|---|---|
| CTRL | <0.2 | 11.3 (1.4) | 21.0 (4.0) |
| RE20 | <0.2 | 3.7 (0.5) | 17.5 (2.6) |
| CFE | <0.2 | 3.3 (0.2) | 16.9 (2.6) |
| RE20 + CFE | <0.2 | 1.1 (0.3) | 5.9 (2.0) |
| RE70 | <0.2 | 3.2 (1.0) | 16.2 (1.2) |
| RE70 + CFE | <0.2 | 1.0 (0.0) | 5.8 (0.6) |

**Table 11: 2,4-decadienal (mg/kg oil) after 0, 14 and 28 days of storage at 20 °C. Values are mean of duplicates; standard deviation from ANOVA gauge R&R are given in parentheses.**

| Batch | 2.4-decadienal Day 0 | 2.4-decadienal Day 14 | 2.4-decadienal Day 28 |
|---|---|---|---|
| CTRL | <0.2 | 15.1 (1.1) | 35.2 (5.6) |
| RE20 | <0.2 | 2.8 (0.4) | 25.6 (5.4) |
| CFE | <0.2 | 2.7 (0.3) | 26.2 (5.1) |
| RE20 + CFE | <0.2 | 0.8 (0.2) | 7.0 (2.9) |
| RE70 | <0.2 | 3.8 (2.0) | 27.5 (4.1) |
| RE70 + CFE | <0.2 | 1.1 (0.2) | 8.2 (0.4) |

### Sensory evaluation

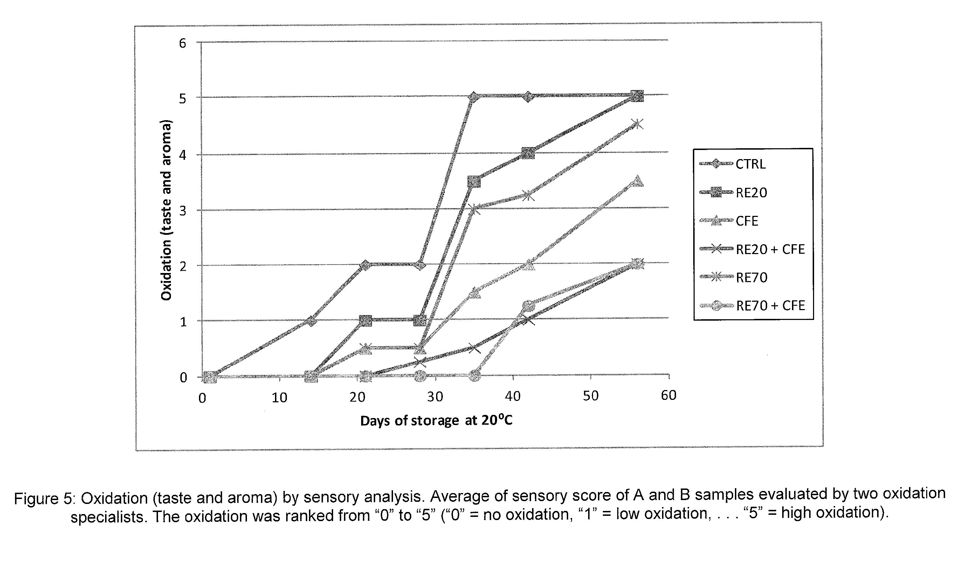

An antioxidant will delay formation of oxidative taste and aroma in the mayonnaise sample. The oxidative taste and aroma in mayonnaise after 0, 14, 21, 28, 42 and 56 days of storage at 20°C is shown in figure 5. With respect to oxidation by sensory analysis, oxidised off-flavour developed faster and increased rapidly in the unprotected control sample compared to treated samples as illustrated in figure 5. In particular the synergistic two-component antioxidant mixtures (i.e. RE20+CFE and RE70+CFE) demonstrated high antioxidant protection against oxidative off-flavour development. This correlated with low oxygen consumption, low CD and low 2,4-heptadienal and 2,4-decadienal development. The treatments did not have an impact on appearance and texture and the plant materials did not contribute with undesirable taste or aroma at tested dosages.

### Statistical analysis (50-50 MANOVA) of synergism between RE and CFE

2-factor interactions between RE and CFE described in the preceding data were further studied using multivariate data analysis of variance (50-50 MANOVA). For all four oxidation parameters (oxygen in sample headspace, conjugated diene hydroperoxides, 2,4-heptadienal and 2,4-decadienal) the interaction RE*CFE was significant (at significance level 5%), thus the antioxidant activity of two-component solution RE and CFE was better than the sum of each component. The fact that, RE and CFE interacts synergistically has not earlier been described in literature.

### CONCLUSION

In the present example a two-component antioxidant mixture of *Caralluma fimbriata* extract (CFE) and *Rosmarinus officinalis* extract (RE) was investigated in mayonnaise with 80 wt% oil.

The combination of CFE and RE was more effective than the individual components and a significant synergistic interaction between CFE and RE was demonstrated by statistical analysis of oxidation parameters (oxygen in sample headspace, conjugated diene hydroperoxides, 2,4-heptadienal and 2,4-decadienal)

The fact that CFE and RE interacts synergistically is novel and provides the following range of functional and economic benefits compared to present commercial natural solutions: high antioxidant activity (increased product shelf-life and consumer satisfaction), low cost-in-use, low impact on taste and low discolouration.

### REFERENCES

Fishwick, M.J. & Swoboda, P.A.T. (1977). Measurement of oxidation of polyunsaturated fatty acids by spectrophotometric assay of conjugated derivatives. Journal of Science Food and Agriculture, 28, 387-391.

Jacobsen, C., Hartvigsen, K., Lund, P., Meyer, A.S., Adler-Nissen, J., Holstborg, J. & Holmer, G. (1999). Oxidation in fish-oil-enriched mayonnaise. I. Assessment of propyl gallate as an antioxidant by discriminant partial least squares regression analysis. European Food Research and Technology, 210, 13-30.

Kahkonen, M. P., Hopia, A. I., Vuorela, H. J., Rauha, J.-P., Pihlaja, K., Kujala, T. S., Heinonen, M. (1999). Antioxidant activity of plant extracts containing phenolic compounds. Journal of Agricultural Food Chemistry, 47, 3954-3962.

Snyder, J. M., Frankel, E. N. & Selke, E. (1985). Journal of American Oil Chemist Society, 62, 1675-1679. Cited from Bailey's Industrial Oil and Fat Products, 6th Edition (Editor Fereidoon Shahidi). Volume 1. Edible Oil and Fat Products: Chemistry, Properties, and Health Effects. Chapter 9: Flavor Components of Fats and Oils (Chi-Tang Ho and Fereidoon Shahidi).

Thorsen, M. A. & Hildebrandt K. S. (2003). Quantitative determination of phenolic diterpenes in rosemary extracts. Aspects of accurate quantification. Journal of Chromatography A, 995, 119-25.

The invention will be described in further detail in the following numbered paragraphs. The present invention provides:
1. An anti-oxidant composition comprising
   (a) an extract obtained from or obtainable from a plant of the *Labiatae* family,
   (b) an extract obtained from or obtainable from a plant of the genus *Caralluma.*
2. A composition according to paragraph 1 wherein the composition comprises
   (a) an extract obtained from or obtainable from a plant of the species *Rosmarinus officinalis, Salvia officinalis* or mixtures thereof.
3. A composition according to paragraph 1 or 2 wherein the composition comprises
   (a) an extract obtained from or obtainable from a plant of the species *Rosmarinus officinalis.*
4. A composition according to paragraph 1, 2 or 3 wherein the composition comprises
   (b) an extract obtained from or obtainable from a plant of the species *Caralluma fimbriata.*
5. A composition according to any one of the preceding paragraphs wherein the composition comprises
   (a) an extract obtained from a plant of the *Labiatae* family.
6. A composition according to any one of the preceding paragraphs wherein the composition comprises
   (a) an extract obtained from a plant of the species *Rosmarinus officinalis, Salvia officinalis* or mixtures thereof.
7. A composition according to any one of the preceding paragraphs wherein the composition comprises
   (a) an extract obtained from a plant of the species *Rosmarinus officinalis.*
8. A composition according to any one of the preceding paragraphs wherein the composition comprises
   (b) an extract obtained from a plant of the genus *Caralluma.*
9. A composition according to any one of the preceding paragraphs wherein the composition comprises
   (b) an extract obtained from a plant of the species *Caralluma fimbriata.*
10. A composition according to any one of the preceding paragraphs wherein the weight ratio of
   (a) the extract obtained from or obtainable from a plant of the *Labiatae* family, to
   (b) the extract obtained from or obtainable from a plant of the genus *Caralluma.*
      is from 20:1 to 1:20.
11. A composition according to paragraph 10 wherein the weight ratio of (a) to (b) is from 1:2 to 1:6.
12. A composition according to any one of the preceding paragraphs wherein the weight ratio of
   (a) phenolic diterpenes obtained from or obtainable from a plant of the *Labiatae* family, to
   (b) the extract obtained from or obtainable from a plant of the genus *Caralluma.*
      is from 1:1 to 1:40.
13. A composition according to paragraph 12 wherein the weight ratio of (a) to (b) is from 1:1 to 1:30.
14. A composition according to paragraph 12 wherein the weight ratio of (a) to (b) is from 1:10 to 1:30.
15. A composition according to paragraph 12 wherein the weight ratio of (a) to (b) is from 1:1 to 1:5.
16. A composition according to any one of the preceding paragraphs wherein the extract obtained from or obtainable from a plant of the *Labiatae* family, such as from a plant of the species *Rosmarinus officinalis, Salvia officinalis* or mixtures thereof, such as from a plant of the species *Rosmarinus officinalis,*
   contains phenolic diterpenes in an amount of at least 1 wt.% based on the weight of the extract.
17. A composition according to any one of the preceding paragraphs wherein the extract obtained from or obtainable from a plant of the *Labiatae* family, such as from a plant of the species *Rosmarinus officinalis, Salvia officinalis* or mixtures thereof, such as from a plant of the species *Rosmarinus officinalis,* contains carnosic acid in an amount of at least 1 wt.% based on the weight of the extract.
18. A composition according to any one of the preceding paragraphs wherein in use the antioxidant inhibits the formation of 2,4-heptadienal and/or 2,4-decadienal
19. An emulsion comprising an anti-oxidant composition according to any one of paragraphs 1 to 18.
20. An emulsion according to paragraph 19 wherein the emulsion is a foodstuff or a cosmetic.
21. An emulsion according to paragraph 19 wherein the emulsion is a foodstuff.
22. A foodstuff comprising an anti-oxidant composition according to any one of paragraphs 1 to 18.
23. A foodstuff according to paragraph 21 or 22 wherein the foodstuff is selected from mayonnaise, salad dressings, oil-in-water emulsions, margarines, low fat spreads, water-in-oil emulsions, dairy products, cheese spreads, processed cheese, dairy desserts, flavoured milks, cream, fermented milk products, cheese, butter, condensed milk products, ice cream mixes, soya products, pasteurised liquid egg, bakery products, confectionery products, fruit products, foods with fat-based or water-containing fillings, raw meat, cooked meat, raw poultry products, cooked poultry products, raw seafood products, cooked seafood products, ready to eat meals, pasta sauces and pasteurised soups.
24. A foodstuff according to paragraph 23 wherein the foodstuff is mayonnaise.
25. A foodstuff according to any one of paragraphs 21 to 23 wherein the (a) extract obtained from or obtainable from a plant of the *Labiatae* family, such as from a plant of the species *Rosmarinus officinalis, Salvia officinalis* or mixtures thereof, such as from a plant of the species *Rosmarinus officinalis,* is present in an amount of 1 to 4000ppm based on the weight of the foodstuff.
26. A foodstuff according to any one of paragraphs 21 to 24 wherein the (a) extract obtained from or obtainable from a plant of the *Labiatae* family, such as from a plant of the species *Rosmarinus officinalis, Salvia officinalis* or mixtures thereof, such as a plant of the species *Rosmarinus officinalis,* is present in an amount of 1 to 2000ppm based on the weight of the foodstuff.
27. A foodstuff according to paragraph 25 wherein the (a) extract obtained from or obtainable from a plant of the *Labiatae* family, such as from a plant of the species *Rosmarinus officinalis, Salvia officinalis* or mixtures thereof, such as from a plant of the species *Rosmarinus officinalis,* is present in an amount of 5 to 1250ppm based on the weight of the foodstuff.
28. A foodstuff according to any one of paragraphs 21 to 27 wherein (a) phenolic diterpenes obtained from or obtainable from a plant of the *Labiatae* family, such as from a plant of the species *Rosmarinus officinalis, Salvia officinalis* or mixtures thereof, such as a plant of the species *Rosmarinus officinalis,* are present in an amount of 1 to 200ppm based on the weight of the foodstuff.
29. A foodstuff according to any one of paragraphs 21 to 27 wherein (a) phenolic diterpenes obtained from or obtainable from a plant of the *Labiatae* family, such as from a plant of the species *Rosmarinus officinalis, Salvia officinalis* or mixtures thereof, such as a plant of the species *Rosmarinus officinalis,* are present in an amount of 4 to 100ppm based on the weight of the foodstuff.
30. A foodstuff according to any one of paragraphs 21 to 26 wherein the (b) extract obtained from or obtainable from a plant of the genus *Caralluma,* such as a plant of the species *Caralluma fimbriata,* is present in an amount of 10 to 3000ppm based on the weight of the foodstuff.
31. A foodstuff according to paragraph 30 wherein the (b) extract obtained from or obtainable from a plant of the genus *Caralluma,* such as a plant of the species *Caralluma fimbriata,* is present in an amount of 30 to 100ppm based on the weight of the foodstuff.
32. A process for preventing and/or inhibiting oxidation of a foodstuff, the process comprising the step of contacting the foodstuff with
   (a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
   (b) an extract obtained from or obtainable from a plant of the genus *Caralluma,* such as a plant of the species *Caralluma fimbriata.*
33. A process according to paragraph 32 wherein
   (a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
   (b) an extract obtained from or obtainable from a plant of the genus *Caralluma,* such as a plant of the species *Caralluma fimbriata,*
      are mixed with the foodstuff together.
34. A process according to paragraph 32 wherein
   (a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
   (b) an extract obtained from or obtainable from a plant of the genus *Caralluma,* such as a plant of the species *Caralluma fimbriata,*
      are mixed with the foodstuff sequentially.
35. A process according to paragraph 32, 33 or 34 wherein the foodstuff is a foodstuff as defined in any one of paragraphs 23 to 31.
36. A process according to any one of paragraphs 32 to 35 characterised by the features of any one of paragraph 2 to 18.
37. Use of
   (a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
   (b) an extract obtained from or obtainable from a plant of the genus *Caralluma,* such as a plant of the species *Caralluma fimbriata,*
      for preventing and/or inhibiting oxidation of an emulsion or a foodstuff.
38. Use according to paragraph 37 for synergistically preventing and/or inhibiting oxidation of an emulsion or a foodstuff.
39. Use according to paragraph 37 or 38 wherein the foodstuff is a foodstuff as defined in any one of paragraphs 23 to 31.
40. Use according to any one of paragraphs 37 to 39 characterised by the features of any one of paragraph 2 to 18.
41. A kit for preparing a composition as defined in any one of paragraphs 1 to 18, the kit comprising
   (a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
   (b) an extract obtained from or obtainable from a plant of the genus *Caralluma,* such as a plant of the species *Caralluma fimbriata,*
      in separate packages or containers; optionally with instructions for admixture and/or contacting and/or use.
42. A composition as substantially hereinbefore described with reference to any one of the Examples.
43. A process as substantially hereinbefore described with reference to any one of the Examples.
44. A use as substantially hereinbefore described with reference to any one of the Examples.
45. A kit as substantially hereinbefore described with reference to any one of the Examples.

All publications mentioned in the above specification are herein incorporated by reference. Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in chemistry, biology, food science or related fields are intended to be within the scope of the following claims

## Claims

1. An anti-oxidant composition comprising
(a) an extract obtained from or obtainable from a plant of the *Labiatae* family,
(b) an extract obtained from or obtainable from a plant of the genus *Caralluma.*

2. A composition according to claim 1 wherein the composition comprises
(a) an extract obtained from a plant of the species *Rosmarinus officinalis.*

3. A composition according to claim 1 or 2 wherein the composition comprises (b) an extract obtained from a plant of the species *Caralluma fimbriata.*

4. A composition according to any one of the preceding claims wherein the weight ratio of
(a) the extract obtained from or obtainable from a plant of the *Labiatae* family, to
(b) the extract obtained from or obtainable from a plant of the genus *Caralluma.*
is from 20:1 to 1:20.

5. A composition according to claim 4 wherein the weight ratio of (a) to (b) is from 1:2 to 1:6.

6. A composition according to any one of the preceding claims wherein the weight ratio of
(a) phenolic diterpenes obtained from or obtainable from a plant of the *Labiatae* family, to
(b) the extract obtained from or obtainable from a plant of the genus *Caralluma.*
is from 1:1 to 1:40.

7. A composition according to any one of the preceding claims wherein the extract obtained from or obtainable from a plant of the *Labiatae* family, such as from a plant of the species *Rosmarinus officinalis, Salvia officinalis* or mixtures thereof, such as from a plant of the species *Rosmarinus officinalis,*
contains phenolic diterpenes in an amount of at least 1 wt.% based on the weight of the extract.

8. A composition according to any one of the preceding claims wherein the extract obtained from or obtainable from a plant of the *Labiatae* family, such as from a plant of the species *Rosmarinus officinalis, Salvia officinalis* or mixtures thereof, such as from a plant of the species *Rosmarinus officinalis,* contains carnosic acid in an amount of at least 1 wt.% based on the weight of the extract.

9. An emulsion comprising an anti-oxidant composition according to any one of claims 1 to 8.

10. A foodstuff comprising an anti-oxidant composition according to any one of claims 1 to 8.

11. A foodstuff according to claim 10 wherein the (a) extract obtained from or obtainable from a plant of the *Labiatae* family, such as from a plant of the species *Rosmarinus officinalis, Salvia officinalis* or mixtures thereof, such as from a plant of the species *Rosmarinus officinalis,* is present in an amount of 1 to 4000ppm based on the weight of the foodstuff.

12. A foodstuff according to claim 10 or 11 wherein the (b) extract obtained from or obtainable from a plant of the genus *Caralluma,* such as a plant of the species *Caralluma fimbriata,* is present in an amount of 10 to 3000ppm based on the weight of the foodstuff.

13. A process for preventing and/or inhibiting oxidation of a foodstuff, the process comprising the step of contacting the foodstuff with
(a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
(b) an extract obtained from or obtainable from a plant of the genus *Caralluma,* such as a plant of the species *Caralluma fimbriata.*

14. Use of
(a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
(b) an extract obtained from or obtainable from a plant of the genus *Caralluma,* such as a plant of the species *Caralluma fimbriata,*
for preventing and/or inhibiting oxidation of an emulsion or a foodstuff.

15. A kit for preparing a composition as defined in any one of claims 1 to 8, the kit comprising
(a) an extract obtained from or obtainable from a plant of the *Labiatae* family, such as from a plant of the species *Rosmarinus officinalis, Salvia officinalis* or mixtures thereof, such as a plant of the species *Rosmarinus officinalis,*
(b) an extract obtained from or obtainable from a plant of the genus *Caralluma,* such as a plant of the species *Caralluma fimbriata,*
in separate packages or containers; optionally with instructions for admixture and/or contacting and/or use.
